# EUROPÄISCHE PATENTSCHRIFT

(11) **EP 3 338 534 B1**
(45) Veröffentlichungstag und Bekanntmachung des Hinweises auf die Patenterteilung: **12.08.2020**
(21) Anmeldenummer: 17188674.0
(22) Anmeldetag: 31.08.2017
(51) Int. Cl.: A01F 15/07

(54) **RUNDBALLENPRESSE**
ROUND BALER
PRESSE À BALLES RONDES

(30) Priorität: 20.12.2016 DE 102016124902
(43) Veröffentlichungstag der Anmeldung: 27.06.2018
(73) Patentinhaber: Usines CLAAS France S.A.S, 57140 St. Rémy / Woippy (FR)
(72) Erfinder: Cazaban-Mazerolles, Benoit, 57070 Chieulles (FR)
(74) Vertreter: CLAAS Gruppe

(56) Entgegenhaltungen:
- EP-A1- 1 266 562
- EP-A1- 2 606 714
- EP-A1- 2 606 715
- EP-A1- 3 199 016

## Beschreibung

Die Erfindung betrifft eine Rundballenpresse mit einer Wickelvorrichtung zum Umhüllen von Rundballen gemäß dem Oberbegriff des Anspruches 1.

Rundballenpressen werden in der Landwirtschaft eingesetzt, um beispielsweise im Schwad abgelegtes halmartiges Erntegut wie Stroh, Heu, Gras oder dergleichen aufzunehmen und zu runden, im Wesentlichen zylinderförmigen Ballen, sogenannten Rundballen, zu pressen. Das Erntegut wird dabei in einer Presskammer der Rundballenpresse zu einem Rundballen verdichtet, wobei die Presskammer umfangsseitig durch einen oder mehrere umlaufenden Riemen und/oder rotierende Stahlrollen begrenzt sein kann. Die gepressten Rundballen werden üblicherweise nach Erreichen einer vorbestimmten Größe mit Schnüren und/oder einem Netz gebunden und durch eine hintere Klappenöffnung der Presskammer ausgeworfen und an eine der Presskammer nachgeordnete Wickelvorrichtung übergeben. Das Umwickeln eines Rundballens erfolgt besonders bei einer Verarbeitung von Gras und/oder Klee, da das Erntegut in dem Rundballen durch das Wickelmaterial, üblicherweise eine Folie, weitestgehend unter Ausschluss von Luft gelagert werden kann, wodurch eine anschließende Gärung zu Silage ermöglicht werden kann. Der Rundballen wird nach dem Pressen und/oder Umwickeln durch die Wickelvorrichtung auf dem Feld abgelegt.

Derartige Rundballenpressen, bei denen fertig gepresste Rundballen aus der Presskammer entweder direkt auf dem Boden abgelegt oder an eine Wickelvorrichtung weitergeleitet werden, sind aus dem Stand der Technik bekannt. Beispielsweise ist aus der EP 0 543 145 A2 eine Rundballenpresse mit einer der Presskammer nachgeordneten Wickeleinrichtung bekannt. Hierbei wird der fertig gepresste Rundballen auf einem Wickeltisch gelagert, um den Rundballen mit einem Wickelmaterial zu Umhüllen. Der Wickeltisch ist derart ausgebildet, dass ein darauf abgelegter Rundballen während des Wickelvorganges um seine Rotationsachse drehbar ist. Der fertig umwickelte Rundballen kann anschließend durch eine Schwenkbewegung des Wickeltisches um eine quer zur Fahrtrichtung angeordnete Schwenkachse aus der Wickelvorrichtung ausgeworfen werden. Um hierbei ein Wegrollen des Rundballens, beispielsweise an einem Hang, zu vermeiden, weist die Rundballenpresse eine der Wickelvorrichtung nachgeordnete Abladekippvorrichtung auf. Dabei trifft der aus der Wickeleinrichtung ausgeworfene Rundballen mit seiner Umfangsfläche auf die Abladekippvorrichtung und wird in eine seitliche Kippbewegung gebracht, so dass der Rundballen mit seiner Stirnfläche auf dem Boden abgelegt werden kann. Hierbei muss der Rundballen jeweils mit einer hohen Geschwindigkeit ausgeworfen werden, um neben einer möglichst kurzen Unterbrechung des Bearbeitungsprozesses jederzeit ein Ablegen des Rundballens auf seiner Seitenfläche zu gewährleisten.

Nachteilig ist hierbei die hohe Auswurfgeschwindigkeit des Rundballens, welche notwendig ist, um ein Abkippen des Rundballens sicherzustellen. Durch die hohe Auswurfgeschwindigkeit kann der mit seiner Stirnfläche auf dem Boden aufkommende Rundballen weiter kippen und mit seiner Umfangsfläche auf dem Boden liegen bleiben. Durch dieses weitere Kippen des Rundballens auf seine Umfangsfläche kann das Aufsammeln der Rundballen zu zusätzlichem Handhabungsaufwand führen und erschwert werden. Weiterhin kann ein derart gekippter Rundballen, insbesondere in hügeligem Gelände, ins Rollen kommen, wodurch es zu einer Gefährdung von Dritten kommen kann. Weiterhin ist hierbei eine Abladekippvorrichtung zur Vermeidung von Beschädigungen durch einen auf diese auftreffenden Rundballen sehr stabil auszulegen, wodurch diese ein hohes Gewicht aufweist.

Eine gattungsgemäße Rundballenpresse ist aus EP 2 606 714 A1 bekannt.

Es ist daher die Aufgabe der vorliegenden Erfindung, eine Rundballenpresse bereitzustellen, welche ein verbessertes Auswerfen des Rundballens ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Die Aufgabe wird gelöst durch eine Rundballenpresse für landwirtschaftliche Halmgüter mit einer Presskammer zum Pressen von Rundballen, einer der Presskammer nachgeordneten Wickelvorrichtung zum Umwickeln eines Rundballens mit einem Wickelmaterial, mit einem Wickeltisch, welcher an einem Grundrahmen der Rundballenpresse schwenkbar gelagert ist. Erfindungsgemäß ist eine Steuerungseinheit vorgesehen, durch welche die Rundballenpresse derart steuerbar ist, dass eine Auswurfgeschwindigkeit eines Rundballens in Abhängigkeit mindestens eines Betriebsparameters einstellbar ist.

Eine derartige Rundballenpresse wird üblicherweise mit einer landwirtschaftlichen Arbeitsmaschine gekoppelt und durch diese gezogen. Die zum Betrieb der Rundballenpresse und/oder der Wickelvorrichtung benötigte Energie wird dabei üblicherweise durch die landwirtschaftliche Arbeitsmaschine bereitgestellt. Ein Auswerfen des Rundballens, welcher zum Umwickeln auf dem Wickeltisch angeordnet ist, erfolgt zumindest teilweise schwerkraftunterstützt und wird üblicherweise durch eine entsprechende Schwenkbewegung des Wickeltisches unterstützt. Die Geschwindigkeit, mit welcher der Rundballen ausgeworfen wird, ist durch die Steuerungseinheit steuer- und/oder regelbar. Die Berücksichtigung mindestens eines Betriebsparameters ermöglicht dabei die Berücksichtigung der jeweiligen Betriebsbedingung zum Zeitpunkt des Ballenauswurfs. Dies hat den Vorteil, dass durch die Steuerungseinheit die Auswurfgeschwindigkeit des Ballens so einstellbar ist, dass auch bei unterschiedlichen Betriebsbedingungen, beispielsweise an einem Hang, ein Rundballen jeweils zuverlässig auf seiner Umfangsfläche oder Stirnfläche abgelegt werden kann.

In einer bevorzugten Ausgestaltung der Erfindung bewirkt die Steuerungseinheit eine Auswurfgeschwindigkeit eines Rundballens durch Anpassung mindestens eines Maschinenparameters. Die Auswurfgeschwindigkeit eines Rundballens ist durch eine oder mehrere Maschinenparameter beeinflussbar. Dies können einzeln oder in Kombination in Abhängigkeit mindestens eines Betriebsparameters gesteuert und/oder geregelt werden. Dies hat den Vorteil, dass je nach Betriebsbedingung und/oder Betriebsparameter mindestens ein geeigneter Maschinenparameter zum zuverlässigen Auswerfen des Rundballens genutzt werden kann. Hierbei bewirkt die Steuerungseinheit eine Steuerung der Auswurfgeschwindigkeit des Rundballens vorteilhafterweise automatisch. Hierdurch kann eine Arbeitsbelastung für einen Bediener gesenkt werden, wodurch Fehlbedienungen vermieden und die Zuverlässigkeit der Ballenablage erhöht werden kann.

Erfindungsgemäß ist eine der Wickelvorrichtung nachgeordnete Kippvorrichtung zur Ablage eines Rundballens auf seiner Stirnfläche auf dem Boden vorgesehen. Der Rundballen wird beim Auswerfen in Richtung der Kippvorrichtung ausgeworfen und bei Kontakt mit dieser eine Kippbewegung in Richtung einer seiner Seitenflächen verursacht, so dass der Rundballen mit einer seiner Stirnflächen mit dem Boden in Kontakt kommt und auf der Stirnfläche stehen bleibt. Durch die Anpassung der Auswurfgeschwindigkeit an tatsächlich vorherrschende Betriebsbedingungen kann bei zuverlässiger Ballenablage eine unnötig hohe Auswurfgeschwindigkeit vermieden und so eine übermäßige Belastung der Kippvorrichtung vermieden werden. Dies hat den Vorteil, dass die Kippvorrichtung leichter konstruiert werden kann, wodurch deren Gewicht und damit eine Schwerpunktverlagerung der Rundballenpresse verringert werden können.

Ferner ist bevorzugt vorgesehen, dass die Kippvorrichtung mindestens um eine horizontale Drehachse verschwenkbar an der Rundballenpresse angeordnet ist. Die Drehachse kann dabei im Wesentlichen parallel und/oder koaxial zu einer Schwenkachse des Wickeltisches angeordnet sein. Durch diese verschwenkbare Anordnung ist ein Winkel zwischen der Kippvorrichtung und der Rundballenpresse, insbesondere dem Grundrahmen und/oder dem Wickeltisch, veränderbar. Dies ermöglicht ein, insbesondere während des Betriebs, kontinuierliches Abstützen der Kippvorrichtung auf dem Boden sowie ein im Wesentlichen absatzfreies Abrollen des ausgeworfenen Rundballens von dem Wickeltisch auf die Kippvorrichtung. Dies hat den Vorteil, dass ein zuverlässigeres Ablegen des Rundballens ermöglicht werden kann. Zusätzlich kann die Kippvorrichtung um vertikale Achse verlagerbar angeordnet sein, wodurch ein verbessertes Nachlaufen der Kippvorrichtung hinter der Wickelvorrichtung ermöglicht wird, wobei durch die Kippvorrichtung im Wesentlichen keine seitlichen Kräfte und/oder Momente in die Wickelvorrichtung eingeleitet werden.

Vorteilhafterweise ist die Kippvorrichtung in Form eines im Wesentlichen starren Gestells mit einem daran, insbesondere starr, angeordneten Abweiser zum Kippen des Rundballens ausgebildet. Der Abweiser ist dabei im Wesentlichen unverschwenkbar an dem Gestell angeordnet, so dass ein Rundballen bei Kontakt mit dem Abweiser in eine Kippbewegung zu einer vorgegebenen Seite verbracht wird. Der Abweiser kann gelenkig an einem fest vorgegeben Ort an dem Gestell angeordnet sein. Eine starre Ausgestaltung der Kippvorrichtung mit einem fest vorgegebenen Ort angeordneten Abweiser ermöglicht einen konstruktiv einfachen und kostengünstigen Aufbau der Kippvorrichtung mit einem geringen Gewicht. Zudem entfällt durch den fest vorgegebenen Anbauort des Abweisers eine aufwändige Einrichtung oder Umrüstung der Kippvorrichtung vor einer Inbetriebnahme.

In einer bevorzugten Ausgestaltung der Erfindung weist der Wickeltisch zur Aufnahme eines Rundballens mindestens eine antreibbare Rolle und/oder mindestens einen antreibbaren Riemen auf. Durch die mindestens eine antreibbare Rolle und/oder den mindestens einen antreibbaren Riemen kann der Rundballen, insbesondere bei einem schwerkraftunterstützten, Auswerfen zusätzlich beschleunigt werden, wodurch die Auswurfgeschwindigkeit an den mindestens einen Betriebsparameter angepaßt werden kann.

In einer besonders bevorzugten Ausgestaltung der Erfindung sind zur Erfassung mindestens eines Betriebsparameters mindestens eine, insbesondere an dem Wickeltisch angeordnete, Wiegevorrichtung, ein Neigungswinkelsensor, und/oder ein Geschwindigkeitssensor vorgesehen. Mittels der Wiegevorrichtung, welche in den Wickeltisch und/oder dessen Lagerung integriert sein kann, ist eine individuelle Messung des Gewichtes jedes auszuwerfenden Rundballens durchführbar, so dass das Gewicht des jeweiligen Ballens zur Erreichung einer gewünschten Auswurfgeschwindigkeit des Ballens als Betriebsparameter berücksichtig werden kann. Durch den Neigungswinkelsensor kann ein Neigungswinkel der Rundballenpresse, d.h. ein Winkel zwischen der Rundballenpresse und/oder dem Grundrahmen und einer Horizontalen, gemessen werden und bei der Steuerung der Auswurfgeschwindigkeit des Rundballens berücksichtig werden. Besonders bei einem schwerkraftunterstützten Auswerfen kann hierbei eine verbesserte Steuerung der Auswurfgeschwindigkeit erreicht werden, da sich die auf den Ballen wirkende Schwerkraft je nach Neigung der Rundballenpresse unterschiedlich auf die Auswurfgeschwindigkeit auswirkt. Ein Geschwindigkeitssensor, welcher die Geschwindigkeit der Rundballenpresse über den Boden ermittelt, ermöglicht eine Berücksichtigung der Geschwindigkeit bei der Steuerung der Ausrufgeschwindigkeit als Betriebsparameter, wodurch die zuverlässige Ablage des Rundballens verbessert werden kann.

In einer besonders bevorzugten Ausgestaltung der Erfindung ist ein Betriebsparameter eine Geschwindigkeit der Rundballenpresse und/oder eine Geschwindigkeit einer diese schleppende landwirtschaftliche Arbeitsmaschine, eine Hangneigung, ein Neigungswinkel der Rundballenpress gegenüber einer Horizontalen, ein Gewicht, ein Durchmesser und/oder eine Breite des Rundballens. Durch die Betriebsparameter, welche durch geeignete Sensoren erfaßt und/oder durch einen Bediener eingegeben und der Steuerungseinheit bereitgestellt werden können, kann auch unter unterschiedlichen Betriebsbedingungen, insbesondere an einem Hang, eine zuverlässige Ablage des Rundballens, insbesondere auf seiner Stirnfläche, erreicht werden.

In einer besonders bevorzugten Ausgestaltung der Erfindung ist ein Maschinenparameter ein Schwenkwinkel des Wickeltisches, eine Schwenkgeschwindigkeit des Wickeltisches, eine Höhe des Wickeltisches über dem Boden, eine Drehzahl und/oder Drehgeschwindigkeit der Rollen und/oder des Riemens. Ein oder mehrere Maschinenparameter können durch geeignete Sensoren erfaßt und/oder durch entsprechend zugeordnete und ausgebildete Aktoren verändert werden. Beispielsweise kann zur Messung eines Winkels zwischen dem Grundrahmen und dem Wickeltisch, dem Schwenkwinkel, ein Schwenkwinkelsensor vorgesehen sein. Durch die Maschinenparameter, welche einzeln oder in Kombination durch die Steuerungseinheit steuer- und/oder regelbar sind, kann eine Ballenablage beeinflußt werden. Durch Berücksichtigung mindestens eines Betriebsparameters bei der Steuerung- und/oder Regelung mindestens eines Maschinenparameters kann die zuverlässige Ablage eines Rundballens auch bei unterschiedlichen Betriebsbedingungen ermöglicht werden.

Nachfolgend wird die Erfindung unter Bezugnahme auf die anliegenden Zeichnungen näher erläutert.

Es zeigt:
- Fig. 1:: eine schematische Seitenansicht einer Rundballenpresse mit einer heckseitig angeordneten Kippvorrichtung;
- Fig. 2:: eine schematische Detailansicht der Kippvorrichtung bei einem Ballenauswurf auf einem geneigten Boden; und
- Fig. 3:: eine perspektivische Darstellung der Wickelvorrichtung mit einem verschwenkten Wickeltisch.

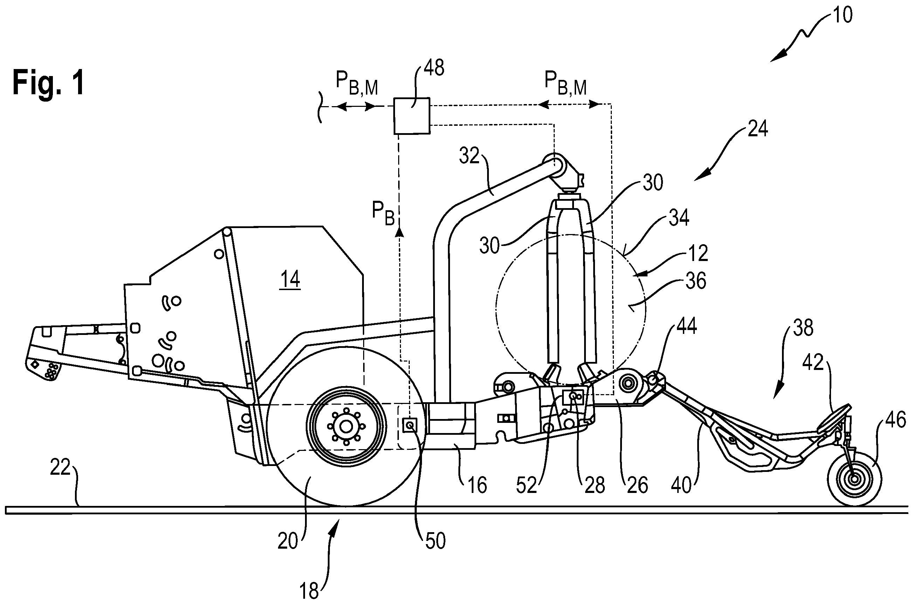

In Figur 1 ist eine Rundballenpresse 10 dargestellt, welche mit einer landwirtschaftlichen Arbeitsmaschine (nicht dargestellt), wie einem Traktor, zum Fortbewegen und Versorgen mit Antriebsenergie verbindbar ist. Zum Formen und Pressen von Rundballen 12 aus Erntegut weist die Rundballenpresse 10 eine Presskammer 14 auf, welche an einem Grundrahmen 16 der Rundballenpresse 10 angeordnet ist. An dem Grundrahmen 16 ist ein Fahrwerk 18 mit Rädern 20 angeordnet, über welche die Rundballenpresse 10 gegenüber dem Boden 22 abgestützt ist. Der Presskammer 14 ist eine Wickelvorrichtung 24 nachgeordnet, an welche ein fertig gepresster Rundballen 12 übergeben werden kann, um diesen mit einem Wickelmaterial, beispielsweise einer Folie, zu umhüllen. Die Wickelvorrichtung 24 weist zur Lagerung des Rundballens 12 einen Wickeltisch 26 auf, welcher um eine Schwenkachse 28 herum schwenkbar an dem Grundrahmen 16 angeordnet ist, beispielsweise um einen Rundballen 12 aus der Presskammer 14 zu übernehmen, oder ihn auszuwerfen. Zum Umwickeln des Rundballens 12 mit dem Wickelmaterial weist die Wickelvorrichtung 24 zwei Wickelarme 30 auf, welche an einem Tragrahmen 32 drehbar angeordnet sind. Die Wickelarme 30 sind U-förmig angeordnet und können ein jeweils endseitig an den Wickelarmen 30 angeordnetes Wickelmaterial (nicht dargestellt) um den Rundballen 12 abwickeln. Der Rundballen 12 kann dabei durch den Wickeltisch 26 ebenfalls in Rotation versetzt werden, wodurch eine vollständige Umwickelung des Rundballens 12 mit dem Wickelmaterial gewährleistet werden kann.

Der Rundballen wird üblicherweise aus der Rundballenpresse 10, beispielsweise aus der Presskammer 14 oder der Wickelvorrichtung 24, ausgeworfen und unmittelbar auf dem Boden 22 oder einer Transportvorrichtung (nicht dargestellt) abgelegt. Der Rundballen 12 wird dabei üblicherweise mit seiner Umfangsfläche 34 auf dem Boden 22 abgelegt. Möglich ist jedoch auch eine Ablage der Rundballen 12 auf einer Stirnfläche 36, was beispielsweise in hügeligem Gelände mit einem gegenüber einer Horizontalen geneigten Boden 22 ein Wegrollen der abgelegten Rundballen 12 verhindern kann. Zudem kann eine Aufnahme der ausgeworfenen Rundballen 12, je nach Greifwerkzeug, durch die stirnseitige Ablage erleichtert werden.

Die in Figur 1 dargestellte Rundballenpresse 10 weist zur Ablage der ausgeworfenen Rundballen 12 eine der Wickelvorrichtung 24 nachgeordnete Kippvorrichtung 38 auf. Der ausgeworfene Rundballen 12 trifft beim Auswerfen auf die Kippvorrichtung 38, welche einen an einem starren Gestell 40 angeordneten Abweiser 42 aufweist. Das Gestell 40 ist dabei üblicherweise zu einer Seite der Rundballenpresse 10 hin versetzt angeordnet, so dass ein darauf auftreffender Rundballen 12 in eine Kippbewegung zu der nicht unterstützen Seite hin bewegt wird. Durch den Kontakt des Rundballens 12 mit dem Abweiser 42 wird dieser weiter gekippt, so dass dieser mit seiner Stirnfläche 36 auf dem Boden 22 zu stehen kommt. Die Kippvorrichtung 38 ist um eine Drehachse 44 herum drehbar an dem Wickeltisch 26, insbesondere heckseitig, angeordnet. Die Drehachse 44 kann dabei parallel und/oder koaxial zu der Schwenkachse 28 des Wickeltisches 26 angeordnet sein. Denkbar ist auch eine drehbare Anordnung der Kippvorrichtung 38 an dem Grundrahmen 16, beispielsweise bei einer Rundballenpresse 10 ohne Wickelvorrichtung 24. Über ein Stützrad 46 ist die Kippvorrichtung 38 gegenüber dem Boden 22 abstützbar.

Erfindungsgemäß weist die Rundballenpresse 10 eine Steuerungseinheit 48 vorgesehen, durch welche die Rundballenpresse 10 derart steuerbar ist, dass eine Auswurfgeschwindigkeit vₐ eines Rundballens 12 in Abhängigkeit mindestens eines Betriebsparameters P_{B} einstellbar ist. Vorteilhaft ist hierbei, dass die Auswurfgeschwindigkeit vₐ des Rundballens 12 an die Betriebsbedingungen anpassbar ist. Unter der Auswurfgeschwindigkeit vₐ des Rundballens 12 ist dabei die Geschwindigkeit zu verstehen, mit der der Ballen die Wickelvorrichtung 24 verlässt. Ein Auswerfen des Rundballens 12 erfolgt üblicherweise auch mit Unterstützung der auf den Ballen wirkenden Schwerkraft, so dass je nach Betriebsbedingungen eine mehr oder weniger große Unterstützung durch die Rundballenpresse 10 notwendig ist, um den Rundballen 12 zuverlässig auszuwerfen. Besonders bei einer Ablage des Rundballens 12 in einer Hanglage mit einem geneigten Boden 22 kann je nach Ablagerichtung, hangabwärts oder hangaufwärts, eine sehr unterschiedliche Unterstützung durch die Rundballenpresse 10 notwendig sein. So kann ist bei einem hangabwärts gerichteten Auswerfen und Ablegen des Rundballens 12 deutlich weniger Unterstützung notwendig, als bei einer hangaufwärts gerichteten Ballenablage. Bei einer gewünschten Ablage des Rundballens 12 auf seine Stirnfläche 36 ist zudem zu berücksichtigen, dass bei einer zu hohen Auswurfgeschwindigkeit vₐ der Rundballen 12 die Kippvorrichtung 38 beschädigen oder über die Stirnfläche 36 hinaus weiter auf seine Umfangsfläche 34 kippen kann.

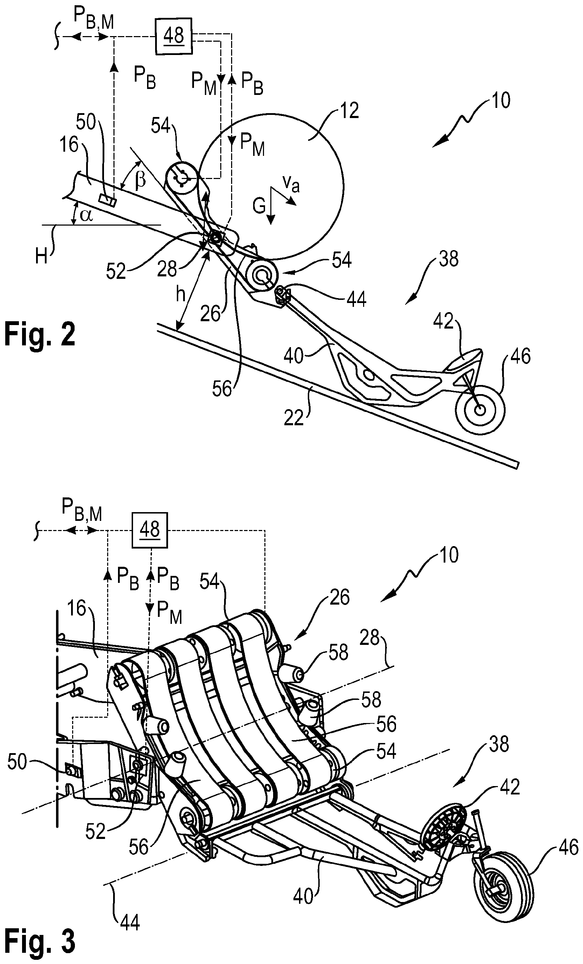

In Figur 2 ist eine schematische Seitenansicht einer Rundballenpresse 10 mit einem auszuwerfenden Rundballen 12 gezeigt, welcher noch auf dem Wickeltisch 26 angeordnet ist. Die Rundballenpresse 10 ist auf einem um einen gegenüber einer Horizontalen H um einen Neigungswinkel α geneigten Boden 22, beispielsweise einem Hang, angeordnet. Der Auswurf des Rundballens 12 von dem Wickeltisch 26 der Wickelvorrichtung erfolgt schwerkraftunterstützt hangabwärts. Um ein zuverlässiges Ablegen des Rundballens 12, insbesondere auf seiner Stirnfläche 36, zu gewährleisten, wird eine geringere Unterstützung durch die Rundballenpresse 10 als bei einem hangaufwärtsgerichteten auswerfen benötigt. Die für die Steuerung und/oder Regelung der Auswurfgeschwindigkeit vₐ benötigten Betriebsparameter P_{B}, wie ein Neigungswinkel α oder ein Gewicht G des Rundballens, können der Steuerungseinheit 48 durch einen Neigungswinkelsensor 50 und/oder eine Wiegevorrichtung 52 bereitgestellt werden. Die Wiegevorrichtung 52 kann an dem Wickeltisch 26, an dem Grundrahmen 16 und/oder in einer Lagerung des Wickeltisches 26 angeordnet sein. Weitere Betriebsparameter P_{B} können eine Breite des Rundballens 12 und/oder ein Durchmesser des Rundballens 12 sein, welche beispielsweise voreinstellbar oder durch geeignete Sensoren für einen oder mehrere Rundballen 12 ermittelbar sein können. Ebenso kann an der Rundballenpresse 10 ein Geschwindigkeitssensor (nicht dargestellt) angeordnet sein, welcher eine tatsächliche Geschwindigkeit der Rundballenpresse 10 über den Boden 22 ermittelt.

Die Steuerungseinheit 48 kann dann in Abhängigkeit mindestens eines Betriebsparameters P_{B} durch Anpassung mindestens eines Maschinenparameters P_{M} die entsprechende Auswurfgeschwindigkeit vₐ des Rundballens 12 bewirken. Die Steuerungseinheit 48 ist über Signalleitungen zumindest mit dem Neigungswinkelsensor 50 und der Wiegevorrichtung 52 verbunden. Die Steuerungseinheit 48 kann mit einer die Rundballenpresse 10 ziehenden landwirtschaftlichen Arbeitsmaschine (nicht dargestellt) zur Signalübertragung verbunden sein, und beispielsweise Geschwindigkeitsinformationen als Betriebsparameter P_{B} empfangen. Zur Veränderung der Auswurfgeschwindigkeit vₐ eines Rundballens 12 ist die Steuerungseinheit 48 mit dem Wickeltisch 26 und/oder antreibbaren Rollen 54 und/oder antreibbaren Riemen 56 des Wickeltisches 26 derart verbunden, dass ein Verschwenken des Wickeltisches 26, eine Bewegung der antreibbaren Rollen 54 und/oder Riemen 56 durch die Steuerungseinheit 48 steuerbar und/oder regelbar ist. Durch die Steuerungseinheit 48 veränderbare Maschinenparameter P_{M} sind dabei ein Schwenkwinkel β zwischen dem Wickeltisch 26 und dem Grundrahmen 16 und/oder eine Schwenkgeschwindigkeit des Wickeltisches 26, eine Drehgeschwindigkeit der antreibbaren Rollen 54 und/oder Riemen 56, eine veränderbare Höhe h des Wickeltisches 26 über dem Boden 22 und/oder eine Geschwindigkeit der Rundballenpresse 10 über den Boden 22. Zur Erfassung des Schwenkwinkels β des kann dem Wickeltisch 26 ein Schwenkwinkelsensor zugeordnet sein, welcher mit der Steuerungseinheit 48 verbunden ist. Weiterhin ist eine Aktorik zum Verschwenken des Wickeltisches 26 vorgesehen, welche ebenfalls mit der Steuerungseinheit 48 verbunden ist.

Die antreibbaren Rollen 54 (Figur 3) sind außenseitig des Wickeltisches 26 angeordnet, wobei die Riemen 56 über die Rollen 54 verlaufen und durch diese antreibbar sind. Seitlich weist der Wickeltisch 26 vertikal angeordnete Stützrollen 58 zur Stabilisierung eines Rundballens (nicht dargestellt) während des Wickelvorganges auf. Durch die Anordnung der Drehachse 44 der Kippvorrichtung 38 heckseitig an dem Wickeltisch 26 kann ein Rundballen bei einem Verschwenken des Wickeltisches 26 im Wesentlichen versatzfrei auf die Kippvorrichtung 38 rollen. Hierbei kann der Rundballen 12 durch ein reines Schwenken des Wickeltisches 26 und/oder durch ein Betätigen der Rollen 54 und/oder Riemen 56 von dem Wickeltisch 26 auf die Kippvorrichtung 38 bewegt werden. Das Gestell 40 der Kippvorrichtung 38 weist eine sich zum Abweiser 42 hin verjüngende Unterstützungsfläche für den Rundballen auf, wodurch mit Abrollen des Rundballens 12 dessen Kippbewegung eingeleitet wird.

### Bezugszeichenliste

- 10: Rundballenpresse
- 12: Rundballen
- 14: Presskammer
- 16: Grundrahmen
- 18: Fahrwerk
- 20: Räder
- 22: Boden
- 24: Wickelvorrichtung
- 26: Wickeltisch
- 28: Schwenkachse
- 30: Wickelarm
- 32: Tragrahmen
- 34: Umfangsfläche
- 36: Stirnfläche
- 38: Kippvorrichtung
- 40: Gestell
- 42: Abweiser
- 44: Drehachse
- 46: Stützrad
- 48: Steuerungseinheit
- 50: Neigungswinkelsensor
- 52: Wiegevorrichtung
- 54: Rolle
- 56: Riemen
- 58: Stützrolle
- P_{B}: Betriebsparameter
- P_{M}: Maschinenparameter
- vₐ: Auswurfgeschwindigkeit
- G: Ballengewicht
- h: Höhe
- H: Horizontale
- α: Neigungswinkel
- β: Schwenkwinkel

## Patentansprüche

1. Rundballenpresse für landwirtschaftliche Halmgüter mit einer Presskammer (14) zum Pressen von Rundballen (12), einer der Presskammer (14) nachgeordneten Wickelvorrichtung (24) zum Umwickeln eines Rundballens (12) mit einem Wickelmaterial mit einem Wickeltisch (26), welcher an einem Grundrahmen (16) der Rundballenpresse (10) schwenkbar gelagert ist, wobei der Wickelvorrichtung (24) eine Kippvorrichtung (38) nachgeordnet ist wobei die Kippvorrichtung (38) zur Ablage eines Rundballens (12) auf seiner Stirnfläche (36) auf dem Boden (22) vorgesehen ist, **dadurch gekennzeichnet, dass** eine Steuerungseinheit (48) vorgesehen ist, durch welche die Rundballenpresse (10) derart steuerbar ist, dass eine Auswurfgeschwindigkeit (vₐ) eines Rundballens (12) zumindest von der Wickelvorrichtung (24) in die Kippvorrichtung (38) in Abhängigkeit mindestens eines Betriebsparameters (P_{B}) einstellbar ist.

2. Rundballenpresse nach Anspruch 1, **dadurch gekennzeichnet, dass** die Steuerungseinheit (48) eine Auswurfgeschwindigkeit (vₐ) eines Rundballens (12) durch eine Anpassung mindestens eines Maschinenparameters (P_{M}) bewirkt.

3. Rundballenpresse nach Anspruch 1 oder 2, **dadurch gekennzeichnet, dass** die Steuerungseinheit (48) eine Steuerung der Auswurfgeschwindigkeit (vₐ) des Rundballens (12) automatisch bewirkt.

4. Rundballenpresse nach Anspruch 1, **dadurch gekennzeichnet, dass** die Kippvorrichtung (38) mindestens um eine horizontale Drehachse (44) verschwenkbar an der Rundballenpresse (10) angeordnet ist.

5. Rundballenpresse nach Anspruch 1 oder 4, **dadurch gekennzeichnet, dass** die Kippvorrichtung (38) in Form eines im Wesentlichen starren Gestells (40) mit einem daran, insbesondere starr, angeordneten Abweiser (42) zum Kippen des Rundballens (12) ausgebildet ist.

6. Rundballenpresse nach einem der vorherigen Ansprüche, **dadurch gekennzeichnet, dass** der Wickeltisch (26) zur Aufnahme eines Rundballens (12) mindestens eine antreibbare Rolle (54) und/oder mindestens einen antreibbaren Riemen (56) aufweist.

7. Rundballenpresse nach einem der vorherigen Ansprüche, **dadurch gekennzeichnet, dass** zur Erfassung mindestens eines Betriebsparameters (P_{B}) mindestens eine, insbesondere an dem Wickeltisch (26) angeordnete, Wiegevorrichtung (52), ein Neigungswinkelsensor (50) und/oder ein Geschwindigkeitssensor vorgesehen sind.

8. Rundballenpresse nach einem der vorherigen Ansprüche, **dadurch gekennzeichnet, dass** ein Betriebsparameter (P_{B}) eine Geschwindigkeit der Rundballenpresse (10) und/oder eine Geschwindigkeit einer diese schleppende landwirtschaftliche Arbeitsmaschine, eine Hangneigung, ein Neigungswinkel (a) der Rundballenpresse (10) gegenüber einer Horizontalen (H), ein Gewicht (G), ein Durchmesser und/oder eine Breite des Rundballens (12) ist.

9. Rundballenpresse nach einem der vorherigen Ansprüche, **dadurch gekennzeichnet, dass** ein Maschinenparameter (P_{M}) ein Schwenkwinkel (β) des Wickeltisches (26), eine Schwenkgeschwindigkeit des Wickeltisches (26), eine Höhe (h) des Wickeltisches (26) über dem Boden (22), eine Drehzahl und/oder Drehgeschwindigkeit der Rollen (54) und/oder des Riemens (56) ist.

## Claims

1. A round bale press for agricultural stalk materials comprising a pressing chamber (14) for pressing round bales (12), a wrapping device (24) arranged downstream of the pressing chamber (14) for wrapping a round bale (12) with a wrapping material and having a wrapping table (26) mounted pivotably on a main frame (16) of the round bale press (10), wherein a tilting device (38) is arranged downstream of the wrapping device (24), wherein the tilting device (38) is provided for depositing a round bale (12) on its end face (36) on the ground (22), **characterised in that** there is provided a control unit (48), by which the round bale press (10) is controllable in such a way that an ejection speed (vₐ) of a round bale (12) at least from the wrapping device (24) into the tilting device (38) is adjustable in dependence on at least one operating parameter (P_{B}).

2. A round bale press according to claim 1 **characterised in that** the control unit (48) causes an ejection speed (vₐ) of a round bale (12) by adaptation of at least one machine parameter (P_{M}).

3. A round bale press according to claim 1 or claim 2 **characterised in that** the control unit (48) automatically provides for control of the ejection speed (vₐ) of the round bale (12).

4. A round bale press according to claim 1 **characterised in that** the tilting device (38) is arranged on the round bale press (10) pivotably at least about a horizontal axis of rotation (44).

5. A round bale press according to claim 1 or claim 4 **characterised in that** the tilting device (38) is in the form of a substantially rigid frame (40) with a deflector (42) arranged thereon, in particular rigidly, for tilting the round bale (12).

6. A round bale press according to one of the preceding claims **characterised in that** the wrapping table (26) for receiving a round bale (12) has at least one drivable roller (54) and/or at least one drivable belt (56).

7. A round bale press according to one of the preceding claims **characterised in that** there is provided at least one weighing device (52) arranged in particular on the wrapping table (26), an inclination angle sensor (50) and/or a speed sensor, for detecting at least one operating parameter (P_{B}).

8. A round bale press according to one of the preceding claims **characterised in that** an operating parameter (P_{B}) is a speed of the round bale press (10) and/or a speed of an agricultural working machine towing same, a slope, an inclination angle (a) of the round bale press (10) relative to a horizontal (H), a weight (G), a diameter and/or a width of the round bale (12).

9. A round bale press according to one of the preceding claims **characterised in that** a machine parameter (P_{M}) is a pivotal angle (β) of the wrapping table (26), a pivotal speed of the wrapping table (26), a height (h) of the wrapping table (26) above the ground (22), and a rotary speed and/or a rotational rate of the rollers (54) and/or the belt (56).

## Revendications

1. Presse à balles rondes pour des produits agricoles à tiges, comprenant une chambre de pressage (14) pour presser des balles rondes (12), un dispositif d'enrubannage (24) disposé en aval de la chambre de pressage (14) pour enrubanner une balle ronde (12) avec un matériau d'enrubannage, une table d'enrubannage (26) qui est monté pivotante sur un bâti (16) de la presse à balles rondes (10), en aval du dispositif d'enrubannage (24) étant disposé un dispositif de basculement (38), le dispositif de basculement (38) étant prévu pour déposer une balle ronde (12) au sol (22) sur sa surface frontale (36), **caractérisée en ce qu'**il est prévu une unité de commande (48) par l'intermédiaire de laquelle la presse à balles rondes (10) peut être commandée de façon qu'une vitesse d'éjection (vₐ) d'une balle ronde (12)) au moins depuis le dispositif d'enrubannage (24) vers le dispositif de basculement (38) soit réglable en fonction au moins d'un paramètre de fonctionnement (P_{B}).

2. Presse à balles rondes selon la revendication 1, **caractérisée en ce que** l'unité de commande (48) génère une vitesse d'éjection (vₐ) d'une balle ronde (12) en adaptant au moins un paramètre machine (P_{M}).

3. Presse à balles rondes selon la revendication 1 ou 2, **caractérisée en ce que** l'unité de commande (48) génère automatiquement une commande de la vitesse d'éjection (vₐ) de la balle ronde (12).

4. Presse à balles rondes selon la revendication 1, **caractérisée en ce que** le dispositif de basculement (38) est disposé sur la presse à balles rondes avec la possibilité de pivoter au moins autour d'un axe de rotation horizontal (44) .

5. Presse à balles rondes selon la revendication 1 ou 4, **caractérisée en ce que** le dispositif de basculement (38) est conçu sous la forme d'un châssis sensiblement rigide (40) avec un déflecteur (42) disposé dessus, en particulier de manière rigide, pour basculer la balle ronde (12) .

6. Presse à balles rondes selon une des revendications précédentes, **caractérisée en ce que**, pour recevoir une balle ronde (12), la table d'enrubannage (26) comporte au moins un rouleau entraînable (54) et/ou au moins une courroie entraînable (56).

7. Presse à balles rondes selon une des revendications précédentes, **caractérisée en ce que**, pour détecter au moins un paramètre de fonctionnement (P_{B}), il est prévu au moins un dispositif de pesage (52) disposé en particulier sur la table d'enrubannage (26), un capteur d'angle d'inclinaison (50) et/ou un capteur de vitesse.

8. Presse à balles rondes selon une des revendications précédentes, **caractérisée en ce qu'**un paramètre de fonctionnement (P_{B}) est une vitesse de la presse à balles rondes (10) et/ou une vitesse d'une machine de travail agricole tractant celle-ci, un dévers, un angle d'inclinaison (α) de la presse à balles rondes (10) par rapport à une horizontale (H), un poids (G), un diamètre et/ou une largeur de la balle ronde (12).

9. Presse à balles rondes selon une des revendications précédentes, **caractérisée en ce qu'**un paramètre machine (P_{M}) est un angle de pivotement (β) de la table d'enrubannage (26), une vitesse de pivotement de la table d'enrubannage (26), une hauteur (h) de la table d'enrubannage (26) au-dessus du sol (22), une vitesse de rotation et/ou une vitesse de rotation des rouleaux (54) et/ou de la courroie (56).
